# EUROPÄISCHE PATENTSCHRIFT

(11) **EP 3 296 160 B1**
(45) Veröffentlichungstag und Bekanntmachung des Hinweises auf die Patenterteilung: **22.05.2019**
(21) Anmeldenummer: 17168181.0
(22) Anmeldetag: 26.04.2017
(51) Int. Cl.: B60R 19/52, B60R 21/11, B62D 25/10, B60R 9/06

(54) **LANDWIRTSCHAFTLICHES FAHRZEUG**
AGRICULTURAL VEHICLE
VÉHICULE AGRICOLE

(30) Priorität: 14.09.2016 DE 102016117241
(43) Veröffentlichungstag der Anmeldung: 21.03.2018
(73) Patentinhaber: CLAAS Tractor S.A.S., 78141 Vélizy-Villacoublay Cedex (FR)
(72) Erfinder: Pinard, Jean-Marc, 78460 Chevreuse (FR); Simoulin, Christophe, 78460 Vèlizy (FR)
(74) Vertreter: CLAAS Gruppe

(56) Entgegenhaltungen:
- US-A- 2 621 817
- US-A- 3 002 579
- US-A- 3 180 441
- US-A1- 2006 120 841
- US-B1- 8 641 093

## Beschreibung

Die vorliegende Erfindung betrifft ein landwirtschaftliches Fahrzeug gemäß dem Oberbegriff des Anspruches 1.

Landwirtschaftliche Fahrzeuge, insbesondere Traktoren, kommen unter anderem bei der Arbeit mit Stroh- oder Silageballen sowie beim Beladen von Anhängern zum Einsatz. Hierzu ist an dem landwirtschaftlichen Fahrzeug bei Bedarf ein als Frontlader ausgebildetes Arbeitsgerät mittels einer Aufnahmevorrichtung anbringbar. Derartige Aufnahmevorrichtungen umfassen zwei plattenförmige, sich in vertikaler Richtung erstreckende Seitenteile, welche an einer Fahrzeugkarosserie befestigt sind. Die Fahrzeugkarosserie kann als selbsttragende Karosserie ausgeführt sein oder einen Rahmen aufweisen. Die beiden Seitenteile sind durch eine Quertraverse, die unterhalb der Fahrzeugkarosserie verläuft, miteinander verbunden. An den Seitenteilen der Aufnahmevorrichtung wird der Frontlader mittels seiner Halterungen lösbar befestigt. Rahmenelemente des Frontladers erstrecken sich parallel zum unter einer Motorhaube angeordneten Motor des Fahrzeugs. Beim Arbeiten mit dem Frontlader wird dieser auch in Positionen oberhalb der Motorhaube verschwenkt. In diesen Arbeitsstellungen des Frontladers besteht die Gefahr, dass aus einer Schaufel des Frontladers aufgenommenes Material auf die Motorhaube fällt. Da Motorhauben heutiger landwirtschaftlicher Fahrzeuge im Wesentlichen aus einem Grundrahmen mit daran befestigten großflächigen Gitterelementen versehen sind, durch welche die Kühlluft des Motors angesaugt wird, können diese durch herunterfallendes Material leicht beschädigt werden. Aufgrund solcher Beschädigungen, wie Löcher oder Risse, der Gitterelemente der Motorhaube besteht die Gefahr, dass die Leistungsfähigkeit des Wärmetauschers durch eintretende Pflanzenfragmente beeinflusst wird. Ebenfalls besteht die Gefahr, dass sich die Zwischenräume zwischen den Kühlrippen mit Pflanzenmaterial zusetzen.

Ein gattungsgemäßes landwirtschaftliches Fahrzeug mit einem in eine Position oberhalb einer einen Motor abschnittsweise umgebenden Motorhaube schwenkbaren Arbeitsgerät ist aus der EP 0 097 437 A1 bekannt. Ein Traktor mit einer hydraulisch hochschwenkbaren Schutzvorrichtung zum Schutz eines Fahrers ist in der US 8,641093 B1 offenbart.

Aufgabe der vorliegenden Erfindung ist es, ein landwirtschaftliches Fahrzeug der eingangs genannten Art derart weiterzuentwickeln, dass die Betriebssicherheit des Fahrzeugs bei einem Betrieb eines Arbeitsgerätes wie einem Frontlader erhöht wird.

Diese Aufgabe wird erfindungsgemäß durch die Merkmale des Anspruches 1 gelöst.

Vorteilhafte Weiterentwicklungen sind Gegenstand der Unteransprüche. Gemäß dem Anspruch 1 wird ein landwirtschaftliches Fahrzeug, insbesondere Traktor, mit einer Fahrzeugkarosserie, auf der ein Motor sowie eine den Motor zumindest abschnittsweise umgebende Motorhaube angeordnet sind, einem vorderen Fahrwerk und einem hinteren Fahrwerk sowie einer Aufnahmevorrichtung zur Anbringung eines in eine Position oberhalb der Motorhaube schwenkbaren Arbeitsgerätes, vorgeschlagen, welches dadurch gekennzeichnet ist, dass das landwirtschaftliche Fahrzeug eine, insbesondere mehrteilige, Schutzvorrichtung zur frontseitigen Anordnung an der Fahrzeugkarosserie aufweist, welche sich abschnittsweise zumindest in horizontaler Richtung über die Motorhaube erstreckt, wobei die Schutzvorrichtung eine Haltevorrichtung umfasst, mittels der die Schutzvorrichtung lösbar an der Fahrzeugkarosserie befestigt ist, wobei die Haltevorrichtung in Form von zwei Schutzbügeln ausgeführt ist, welche am vorderen Ende der Fahrzeugkarosserie angeordnet sind, und die Schutzvorrichtung zumindest ein schwenkbar und/oder lösbar an der Haltevorrichtung angeordnetes Schutzelement aufweist. Durch die zumindest abschnittsweise horizontale Erstreckung der Schutzvorrichtung oberhalb der Motorhaube schützt diese vor herunterfallendem Material, welches zu einer Beschädigung der Gitterelemente der Motorhaube führen könnte. Das Vermeiden von Beschädigungen der Gitterelemente der Motorhaube führt zu einer Erhöhung der Betriebssicherheit des landwirtschaftlichen Fahrzeugs.

Gemäß dem Anspruch 1 soll die Schutzvorrichtung eine Haltevorrichtung umfassen, mittels der die Schutzvorrichtung lösbar an der Fahrzeugkarosserie zu befestigen ist. Dabei kann es sich um eine Halterung handeln, welche im Zusammenhang mit der Montage und dem Einsatz des als Frontladers ausgebildeten Arbeitsgerätes zur Verwendung kommt.

Gemäß dem Anspruch 1 soll die Haltevorrichtung als zwei Bügel ausgeführt sein, welche im Bereich des vorderen Fahrwerks beidseitig an der Fahrzeugkaroserie angeordnet sind. Die Bügel dienen dazu, die den Motor abdeckende Motorhaube vor einer Kollision mit dem Frontlader zu schützen.

Gemäß dem Anspruch 1 soll die Schutzvorrichtung zumindest ein schwenkbar und/oder lösbar an der Haltevorrichtung angeordnetes Schutzelement aufweisen. Somit lässt sich das zumindest eine Schutzelement bei Bedarf montieren und demontieren. Des Weiteren ist eine schwenkbare Anordnung des Schutzelementes von Vorteil, wenn die Motorhaube zu Wartungszwecken geöffnet werden muss. Auf eine Demontage des zumindest einen Schutzelementes kann dann verzichtet werden.

Weiterhin kann der jeweilige Bügel der Haltevorrichtung an seinem das Schutzelement aufnehmenden freien Ende einen Endabschnitt mit mehreren, in vertikaler Richtung zueinander versetzt angeordneten Bohrungen aufweisen.

Hierbei können die Bohrungen der Aufnahme von Bolzen dienen. Die Bolzen können der Fixierung gegen ein Verschwenken des Schutzelementes dienen. Weiterhin können diese Bohrungen als Aufnahme für ein oder mehrere eine Schwenkachse bildende Bauteile dienen.

Bevorzugt kann das zumindest eine Schutzelement parallel zueinander angeordnete Streben umfassen, welche sich abschnittsweise in Längsrichtung der Fahrzeugkarosserie erstrecken. Die Streben bilden eine Art Rost, welcher verhindert, dass herunterfallendes Material die Gitterelemente der Motorhaube erreicht beziehungsweise vor dem Auftreffen auf den Gitterelementen zumindest abgebremst wird, wodurch Beschädigungen der Gitterelemente verhindert oder wenigstens minimiert werden.

Dabei kann das Schutzelement zwei außenseitige, parallel zueinander angeordnete Längsstreben aufweisen, zwischen denen zumindest zwei Querstreben angeordnet sind. Die Längsstreben fungieren als Bauteile zur Befestigung der Schutzvorrichtung an der Haltevorrichtung. Des Weiteren nehmen die Querstreben die parallel zueinander angeordneten Streben auf. Die Querstreben können ihrerseits lösbar mit den Längsstreben und den zwischen diesen angeordneten Streben verbunden sein. Dies gestattet den Austausch einzelner Streben.

Insbesondere können die Längsstreben einen in ihrer Längsrichtung gekrümmten Verlauf aufweisen. Der gekrümmte Verlauf der Längsstreben kann dabei mit der Kontur der Motorhaube korrespondieren.

Bevorzugt können die Längsstreben Endabschnitte aufweisen, die mit einer ersten Bohrung versehen sind, um welche, radial zu dieser beabstandet, zumindest zwei weitere Durchbohrungen auf einer Kreisbahn angeordnet sind. Die zumindest zwei entlang des Kreisbogens angeordneten Durchbohrungen dienen dazu, die Schutzvorrichtung in einer ersten Stellung, in der die Schutzvorrichtung sich in einer über die Motorhaube geschwenkten Position befindet, und in einer zweiten Stellung, in der sich die Schutzvorrichtung in einer von der Motorhaube abgewandten Position befindet, sicher zu fixieren.

Weiterhin kann das Schutzelement als ein flächiges Bauteil ausgeführt sein. Ein flächig ausgebildetes Schutzelement mit einer geschlossenen Oberfläche kann auf den Querstreben befestigt werden. Die Verwendung eines flächigen Schutzelementes kann relevant sein, wenn mit dem als Arbeitsgerät ausgebildeten Frontlader beispielsweise Material transportiert wird, dessen Außendurchmesser kleiner ist als der der Öffnungen in den Gitterelementen der Motorhaube. Vorteilhaft ist, dass die Schutzvorrichtung in eine der Motorhaube abgewandte Richtung verschwenkbar ist. Dadurch lässt sich eine versehentlich Kollision der Schutzvorrichtung mit der Motorhaube vermeiden. Durch die Möglichkeit des Wegschwenkens der Schutzvorrichtung aus der Bewegungsbahn der Motorhaube, die diese beim Öffnen beschreibt, entfällt eine, auch nur teilweise, Demontage der Schutzvorrichtung. Insbesondere lässt sich eine Kollision der Schutzvorrichtung mit der Motorhaube ungeachtet der Schwenkrichtung der Motorhaube vermeiden.

Es ist von Vorteil, wenn die Schutzvorrichtung aus einem Leichtmetall oder einem Kunststoff hergestellt ist. Hierdurch lässt sich ein geringes Gewicht der Schutzvorrichtung erreichen, was von Bedeutung ist, wenn die am Fahrzeug montierte Schutzvorrichtung, beispielsweise wegen Wartungsarbeiten im Motorraum, was das Öffnen der Motorhaube erforderlich werden lässt, verschwenkt werden muss. Das geringe Gewicht ermöglicht ein manuelles Bewegen der Schutzvorrichtung.

Die vorliegende Erfindung wird nachstehend anhand eines in den Zeichnungen dargestellten Ausführungsbeispieles näher erläutert.

Es zeigen:
Fig. 1 eine schematische Seitenansicht eines Traktors mit angebautem Arbeitsgerät;
Fig. 2 eine perspektivische Teilansicht eines vorderen Teils eines Traktors;
Fig. 3 eine perspektivische Ansicht einer an einer Halteeinrichtung angeordneten Schutzvorrichtung;
Fig. 4 eine schematische Darstellung einer Motorhaube in geöffneter Position sowie die Schutzvorrichtung gemäß Fig. 3 in weggeschwenkter Stellung.

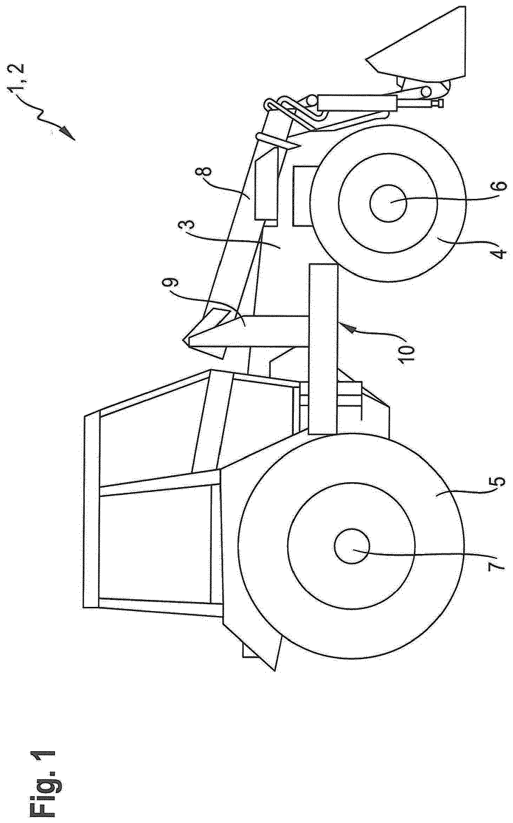

Die Darstellung in Fig. 1 zeigt in einer schematischen Seitenansicht ein landwirtschaftliches Fahrzeug 1, insbesondere einen Traktor 2, an dessen Fahrzeugkarosserie 3 lenkbare Vorderräder 4 an einem vorderen Fahrwerk 6, Hinterräder 5 an einem hinteren Fahrwerk 7 und ein als ein Arbeitsgerät ausgebildeter Frontlader 8 montiert sind. Die Fahrzeugkarosserie 3 kann als selbstragende Karosserie ausgeführt sein oder einen ein- oder mehrteiligen Rahmen aufweisen. Der im Bedarfsfall zu montierende Frontlader 8 ist mittels zweier an gegenüberliegenden Seiten der Fahrzeugkarosserie 3 zu montierender Halterungen 9 an dem Traktor 2 anbringbar. Hierzu ist an der Fahrzeugkarosserie 3 eine Aufnahmevorrichtung 10 lösbar angebracht, die der Befestigung der Halterungen 9 des Frontladers 8 an der Fahrzeugkarosserie 3 dient. Die Aufnahmevorrichtung 10 ist mittels Schraubverbindungen an dem Fahrzeug 1 respektive dem Traktor 2 angebracht, so dass auch diese bei Bedarf abbaubar ist. Zugleich ermöglicht diese Ausführung der Aufnahmevorrichtung 10 auch eine Nachrüstung der landwirtschaftlichen Fahrzeuge.

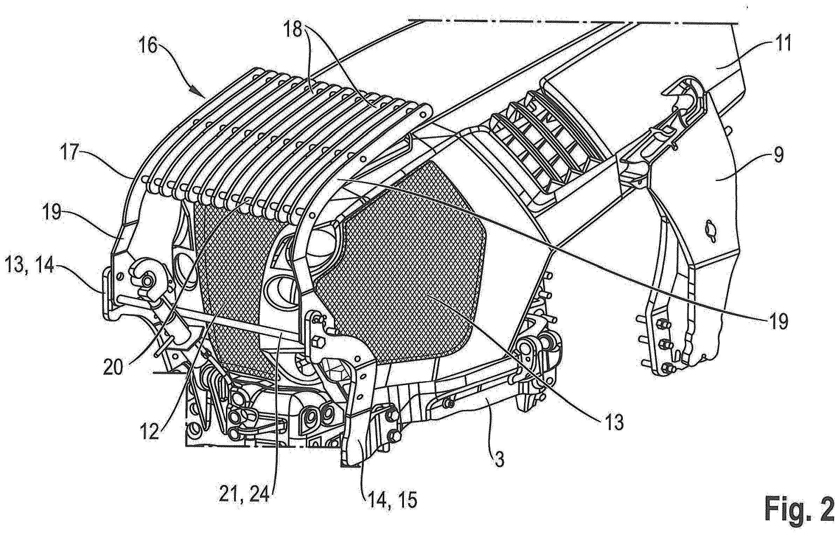

In Fig. 2 ist eine perspektivische Teilansicht eines vorderen Teils eines Traktors 1 dargestellt. Dargestellt ist ein Teil der Fahrzeugkarosserie 3, an welcher frontseitig ein nicht näher dargestellter Frontkraftheber angeordnet ist. An der Fahrzeugkarosserie 3 ist weiterhin eine Motorhaube 11 angeordnet, welche sich im Wesentlichen in Längsrichtung des Traktors 2 erstreckt. Die Motorhaube 11 umgibt einen dem Antrieb des Traktors 2 dienenden Motor zumindest abschnittsweise, welcher aus Vereinfachungsgründen nicht dargestellt ist. Die Motorhaube 11 schützt den Motor und weitere diesem zugeordnete Komponenten vor Einflüssen von außen. So weist der Motor des Traktors 2 einen diesem vorgeschalteten Motorkühler auf, welcher ebenfalls von der Motorhaube umgeben ist. Der Motorkühler umfasst einen Ventilator, welcher Umgebungsluft ansaugt. Das Ansaugen erfolgt durch mehrere in der Motorhaube 11 angeordnete Gitterelemente 12, 13 hindurch. Wie aus der Darstellung in Fig. 2 ersichtlich ist, erstreckt sich ein frontseitig angeordnetes Gitterelement 12 mit einem ersten Abschnitt abschnittsweise in vertikaler Richtung, während ein sich daran anschließender zweiter Abschnitt des frontseitigen Gitterelementes 12 eine im Wesentlichen horizontale Ausdehnung in Längsrichtung des Traktors 2 sowie quer hierzu aufweist. Das fronseitige Gitterelement 12 weist hierbei in der Seitenansicht eine im Wesentlichen L-förmige Kontur auf. Parallel zur Längsachse des Traktors 2 sind beiderseits des Motors seitliche Gitterelemente 13 angeordnet. Die seitlichen Gitterelemente 13 befinden sich ebenfalls im Frontbereich des Traktors 2, um ein großflächiges Ansaugen von Kühlluft von der Seite her zu ermöglichen. Die Gitterelemente 12, 13 verhindern das Einsaugen von pflanzlichen Fragmenten, welche zu einer Beeinflussung der Leistungsfähigkeit des Motorkühlers führen können.

Weiterhin zeigt die Darstellung in Fig. 2 zwei Schutzbügel 14, welche am vorderen Ende der Fahrzeugkarosserie 3 respektive am vorderen Fahrwerk 6 angeordnet sind. Die Schutzbügel 14 werden gleichfalls mittels einer Schraubverbindung an dem Fahrzeug 1 befestigt. Die Schutzbügel 14 dienen dazu, die den Motor abdeckende Motorhaube 11 vor einer Kollision mit dem Frontlader 8 zu schützen. Die Anbringung der Schutzbügel 14 kann im Rahmen einer Nachrüstung eines Traktors 2 mit der Aufnahmevorrichtung 10 erfolgen, wenn für diesen ursprünglich eine Anbringung eines Frontladers 8 nicht vorgesehen war.

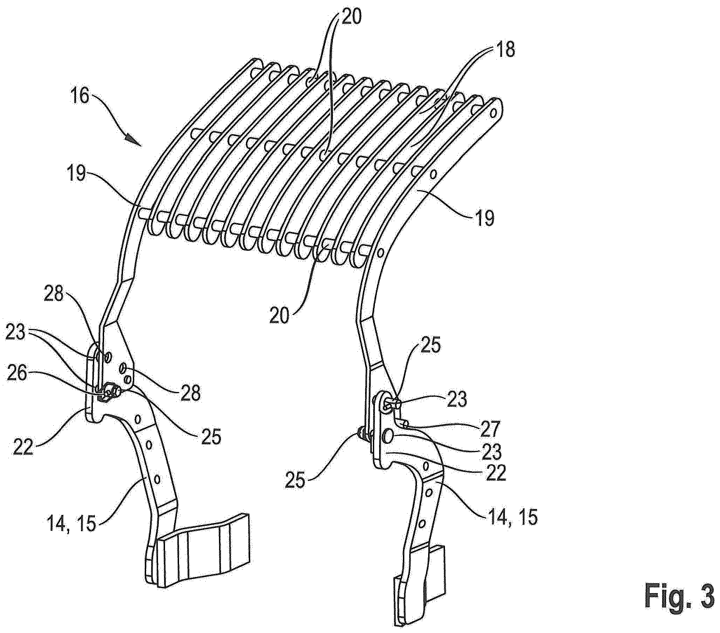

Fig. 3 zeigt eine Darstellung einer perspektivischen Teilansicht der Schutzvorrichtung 16. Die Schutzvorrichtung 16 ist, wie bereits ausgeführt, an den Schutzbügeln 14, die als Haltevorrichtung 15 der Schutzvorrichtung 16 ausgeführt sind, lösbar befestigt. Die Verwendung der Schutzbügel 14 als Haltevorrichtung 15 der Schutzvorrichtung 16 hat den Vorteil, dass die Schutzbügel 14 bei der Anbringung des Frontladers 8 im Allgemeinen ebenfalls an dem Traktor 2 montiert werden, so dass auf zusätzliche Bauteile zur Montage der Schutzvorrichtung 16 verzichtet werden kann.

Wie aus der Darstellung gemäß Fig. 2 ersichtlich ist, umfasst die Schutzvorrichtung 16 zumindest ein Schutzelement 17. Das zumindest eine Schutzelement 17 ist aus einer Vielzahl von parallel zueinander angeordneten Streben 18 gebildet, welche zwischen zwei äußeren Längsstreben 19 angeordnet sind. Die Streben 18 erstrecken sich ausgehend von der Stirnfläche der Motorhaube 11 abschnittsweise über diese hinweg, im Wesentlichen horizontal in Richtung der Halterungen 9. Die horizontale Erstreckung hängt dabei von der Ausdehnung des frontseitigen Gitterelementes 12 in korrespondierender Richtung ab. Weiterhin ist vorgesehen, dass die Streben 18 über das frontseitige Gitterelement 12 abschnittsweise hinausragen. Denkbar ist auch, die Streben 18 zwischen den äußeren Längsstreben 19 durch ein flächiges Bauteil zu ersetzen. Weiterhin kann vorgesehen sein, dass die Schutzvorrichtung 16 monolithisch ausgestaltet ist.

Das zumindest eine Schutzelement 17 der Schutzvorrichtung 16 ist um eine horizontale Schwenkachse 21 in der Weise drehbar, dass das Schutzelement 17 in eine der Motorhaube 11 abgewandte Position überführbar ist. Die Schwenkachse 21 kann von einer durchgehenden Stange 24 gebildet werden, welche sich durch koaxial angeordnete Bohrungen 23 in den Schutzbügeln 14 sowie eine erste Bohrungen 26 in den Endabschnitten der äußeren Längsstreben 19 erstreckt. Die Stange 24 kann durch Verschrauben gegen ein herausgleiten gesichert sein. Alternativ können Bolzen 25 durch die Bohrungen 23 in den Schutzbügeln 14 sowie der ersten Bohrungen 26 in dem jeweiligen Endabschnitten der äußeren Längsstreben 19 hindurchgeführt sein, um welche die äußeren Längsstreben 19 schwenkbar sind. Die Bolzen 25 sind durch Splinte gegen ein Verlieren gesichert. Zudem ermöglicht diese Ausgestaltung der Schwenkachse 21 eine werkzeuglose Demontage der Schutzvorrichtung 16.

Die Längsstreben 19 und die zwischen diesen angeordneten Streben 18 sind durch Querstreben 20 miteinander verbunden, wie aus Fig. 3 ersichtlich ist. Die Querstreben 20 erstrecken sich zwischen den äußeren Längsstreben 19. Mittels der äußeren Längsstreben 19, welche eine etwa C-förmige Kontur aufweisen, ist das Schutzelement 17 an den Schutzbügeln 14 lösbar befestigt. Hierzu weisen die Schutzbügel 14, wie ebenfalls aus Fig. 3 ersichtlich ist, einen etwa T-förmigen Endabschnitt 22 auf.

An der jeweiligen äußeren Längsstrebe 19 ist jeweils ein nach außen gerichteter bolzenförmiger Anschlag 27 vorgesehen, welcher sich am Endabschnitt 22 des jeweiligen Schutzbügels 14 abstützt. Der Anschlag dient der Begrenzung der Schwenkbewegung der Schutzvorrichtung 16, so dass diese nicht auf der Motorhaube 11 zum Aufliegen kommt. Zur Sicherung der Schutzvorrichtung 16 gegen ein ungewolltes Verschwenken entgegen der Fahrtrichtung sind in den Endabschnitten 22 der Schutzbügel 14 sowie den Endabschnitten der äußeren Längsstreben 19 in vertikaler Richtung zu der Schwenkachse 21 beabstandet weitere miteinander korrespondierende Bohrungen 23 bzw. Durchbohrungen 28 angeordnet, durch welche Bolzen 25 hindurchführbar sind. Diese Bolzen 25 werden ebenfalls bevorzugt jeweils mittels eines Splints gesichert.

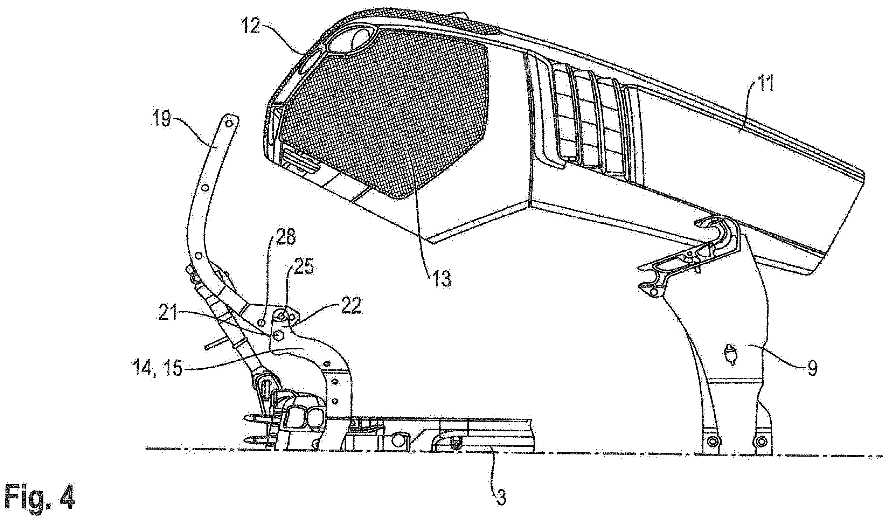

Wie aus der Darstellung in Fig. 3 hervorgeht, sind zumindest zwei Durchbohrungen 28 im Endabschnitt des jeweiligen Längsträgers 19 entlang eines Kreisbogens angeordnet, dessen Mittelpunkt die Schwenkachse 21 bildet. Die zumindest zwei entlang des Kreisbogens angeordneten Durchbohrungen 28 dienen dazu, die Schutzvorrichtung 16 in einer ersten Stellung, in der die Schutzvorrichtung 16 sich in einer über die Motorhaube 11 geschwenkten Position befindet, und in einer zweiten Stellung, in der die Schutzvorrichtung 16 in einer von der Motorhaube abgewandten Position befindet, zu fixieren. Die zweite Stellung der Schutzvorrichtung ist schematisch in der Darstellung gemäß der Fig. 4 gezeigt. In Fig. 4 ist aus Vereinfachungsgründen lediglich die Motorhaube 11 in einer aufgestellten Position dargestellt, sowie die Schutzvorrichtung 16 in ihrer zweiten Stellung. Auf die Darstellung des an dem Traktor 2 angebrachten Frontladers 8 sowie weiteren Bauteilen des Traktors 2, beispielsweise des Motors und dergleichen, wurde verzichtet. Aus der Darstellung ist ersichtlich, dass der jeweilige Bolzen 25 sich in der hinteren Durchbohrung 28 am Endabschnitt des Längsträgers 19 befindet. Nachdem die Schutzvorrichtung 16 in diese zweite Stellung verschwenkt wurde, lässt sich die Motorhaube 11 ohne weiteres in gegenläufiger Richtung verschwenken, ohne mit der Schutzvorrichtung 16 zu kollidieren.

### Bezugszeichenliste

- 1: Landwirtschaftliches Fahrzeug
- 2: Traktor
- 3: Fahrzeugkarosserie
- 4: Vorderräder
- 5: Hinterräder
- 6: Vorderes Fahrwerk
- 7: Hinteres Fahrwerk
- 8: Frontlader
- 9: Halterungen
- 10: Aufnahmevorrichtung
- 11: Motorhaube
- 12: Frontseitiges Gitterelement
- 13: Seitliches Gitterelement
- 14: Schutzbügel
- 15: Haltevorrichtung
- 16: Schutzvorrichtung
- 17: Schutzelement
- 18: Strebe
- 19: Längsstrebe
- 20: Querstrebe
- 21: Schwenkachse
- 22: Endabschnitt
- 23: Bohrung
- 24: Stange
- 25: Bolzen
- 26: Erste Bohrung
- 27: Anschlag
- 28: Durchbohrung

## Patentansprüche

1. Landwirtschaftliches Fahrzeug (1), insbesondere Traktor (2), mit einer Fahrzeugkarosserie (3), auf der ein Motor sowie eine den Motor zumindest abschnittsweise umgebende Motorhaube (11) angeordnet sind, einem vorderen Fahrwerk (6) und einem hinteren Fahrwerk (7) sowie einer Aufnahmevorrichtung (10) zur Anbringung eines in eine Position oberhalb der Motorhaube (11) schwenkbaren Arbeitsgerätes (8), wobei das landwirtschaftliche Fahrzeug (1) eine, insbesondere mehrteilige, Schutzvorrichtung (16) zur frontseitigen Anordnung an der Fahrzeugkarosserie (3) des Fahrzeuges (1) aufweist, welche sich abschnittsweise zumindest in horizontaler Richtung über die Motorhaube (11) erstreckt, **dadurch gekennzeichnet, dass** die Schutzvorrichtung (16) eine Haltevorrichtung (15) umfasst, mittels der die Schutzvorrichtung (16) lösbar an der Fahrzeugkarosserie (3) befestigt ist, wobei die Haltevorrichtung (15) in Form von zwei Schutzbügeln (14) ausgeführt ist, welche am vorderen Ende der Fahrzeugkarosserie (3) angeordnet sind, und die Schutzvorrichtung (16) zumindest ein schwenkbar und/oder lösbar an der Haltevorrichtung (15) angeordnetes Schutzelement (17) aufweist.

2. Landwirtschaftliches Fahrtzeug (1) nach Anspruch 1, **dadurch gekennzeichnet, dass** der jeweilige Bügel (14) der Haltevorrichtung (15) an seinem das Schutzelement (17) aufnehmenden freien Ende einen Endabschnitt (22) mit mehreren, in vertikaler Richtung zueinander versetzt angeordneten Durchbohrungen (23) aufweist.

3. Landwirtschaftliches Fahrtzeug (1) nach Anspruch 1 oder 2, **dadurch gekennzeichnet, dass** das zumindest eine Schutzelement (17) parallel zueinander angeordnete Streben (18) umfasst, welche sich abschnittsweise in Längsrichtung der Fahrzeugkarosserie (3) erstrecken.

4. Landwirtschaftliches Fahrtzeug (1) nach einem der Ansprüche 1 bis 3, **dadurch gekennzeichnet, dass** die Schutzvorrichtung (16) zwei außenseitige, parallel zueinander angeordnete Längsstreben (19) aufweist, zwischen denen das zumindest zwei Querstreben (20) aufweisende Schutzelement (17) angeordnet ist.

5. Landwirtschaftliches Fahrtzeug (1) nach Anspruch 4, **dadurch gekennzeichnet, dass** die Längsstreben (19) einen in ihrer Längsrichtung gekrümmten Verlauf aufweisen.

6. Landwirtschaftliches Fahrtzeug (1) nach einem der Ansprüche 4 oder 5, **dadurch gekennzeichnet, dass** die Längsstreben (19) Endabschnitte aufweisen, die mit einer ersten Bohrung (26) versehen sind, um welche, radial zu dieser beabstandet, zumindest zwei weitere Durchbohrungen (28) auf einer Kreisbahn angeordnet sind.

7. Landwirtschaftliches Fahrtzeug (1) nach einem der vorhergehenden Ansprüche, **dadurch gekennzeichnet, dass** das Schutzelement (17) als ein flächiges Bauteil ausgeführt ist.

8. Landwirtschaftliches Fahrtzeug (1) nach einem der Ansprüche 1 bis 7, **dadurch gekennzeichnet, dass** die Schutzvorrichtung (16) in eine der Motorhaube (11) abgewandte Richtung verschwenkbar ist.

9. Landwirtschaftliches Fahrtzeug (1) nach einem der Ansprüche 1 bis 8, **dadurch gekennzeichnet, dass** die Schutzvorrichtung (16) aus einem Leichtmetall und/oder einem Kunststoff hergestellt ist.

## Claims

1. An agricultural vehicle (1), in particular a tractor (2), with a vehicle body (3) on which an engine as well as an engine cover (11) which at least partially surrounds the engine are disposed, a front chassis (6) and a rear chassis (7) as well as a loader device (10) for attaching an implement (8) which can be pivoted into a position above the engine cover (11), wherein the agricultural vehicle (1) comprises a guard device (16), which in particular has multiple parts, to be disposed on the front of the vehicle body (3) of the vehicle (1) part of which extends at least in a horizontal direction over the engine cover (11), **characterized in that** the guard device (16) comprises a retaining device (15) by means of which the guard device (16) is releasably fastened to the vehicle body (3), wherein the retaining device (15) is configured in the form of two guard brackets (14) which are disposed on the front end of the vehicle body (3), and the guard device (16) comprises at least one guard element (17) which is pivotably disposed and/or releasably disposed on the retaining device (15).

2. The agricultural vehicle (1) as claimed in claim 1, **characterized in that**, at its free end accommodating the guard element (17), the respective bracket (14) of the retaining device (15) comprises an end section (22) with a plurality of through apertures (23) which are offset with respect to each other in the vertical direction.

3. The agricultural vehicle (1) as claimed in claim 1 or claim 2, **characterized in that** the at least one guard element (17) comprises struts (18) which are disposed parallel to each other, which extend partially in the longitudinal direction of the vehicle body (3).

4. The agricultural vehicle (1) as claimed in one of claims 1 to 3, **characterized in that** the guard device (16) comprises two outer longitudinal struts (19) which are disposed parallel to each other, between which the guard element (17) comprising at least two cross struts (20) is disposed.

5. The agricultural vehicle (1) as claimed in claim 4, **characterized in that** the longitudinal struts (19) have a curved progression in their longitudinal direction.

6. The agricultural vehicle (1) as claimed in claim 4 or claim 5, **characterized in that** the longitudinal struts (19) comprise end sections which are provided with a first aperture (26) around which, radially spaced with respect thereto, at least two further through apertures (28) are disposed on a circular path.

7. The agricultural vehicle (1) as claimed in one of the preceding claims, **characterized in that** the guard element (17) is configured as a planar component.

8. The agricultural vehicle (1) as claimed in one of claims 1 to 7, **characterized in that** the guard device (16) is pivotable in a direction away from the engine cover (11).

9. The agricultural vehicle (1) as claimed in one of claims 1 to 8, **characterized in that** the guard device (16) is produced from a lightweight metal and/or from a plastic.

## Revendications

1. Véhicule agricole (1), en particulier tracteur (2), comprenant une carrosserie de véhicule (3) sur laquelle sont disposés un moteur ainsi qu'un capot-moteur (11) entourant le moteur au moins par endroits, comprenant un train de roulement avant (6) et un train de roulement arrière (7) ainsi qu'un dispositif récepteur (10) pour assujettir un outil de travail (8) pivotant dans une position au-dessus du capot-moteur (11), le véhicule agricole (1) comprenant un dispositif de protection (16), en particulier en plusieurs parties, à monter frontalement sur la carrosserie de véhicule (3) du véhicule (1), lequel s'étend par endroits au moins dans la direction horizontale au-dessus du capot-moteur (11), **caractérisé en ce que** le dispositif de protection (16) comprend un dispositif de maintien (15) au moyen duquel le dispositif de protection (16) est fixé de façon amovible à la carrosserie de véhicule (3), le dispositif de maintien (15) étant conçu en forme de deux étriers de protection (14) qui sont disposés à l'extrémité avant de la carrosserie de véhicule (3), et le dispositif de protection (16) comprenant au moins un élément de protection (17) disposé de manière pivotante et/ou amovible sur le dispositif de maintien (15) .

2. Véhicule agricole (1) selon la revendication 1, **caractérisé en ce que** chaque étrier (14) du dispositif de maintien (15) comporte, à son extrémité libre redevant l'élément de protection (17), une portion d'extrémité (22) avec plusieurs trous débouchants (23) disposés de manière mutuellement décalée dans la direction verticale.

3. Véhicule agricole (1) selon la revendication 1 ou 2, **caractérisé en ce que** le au moins un élément de protection (17) comporte des bras (18) qui sont disposés parallèlement les uns aux autres et qui s'étendent par portions dans la direction longitudinale de la carrosserie de véhicule (3).

4. Véhicule agricole (1) selon une des revendications 1 à 3, **caractérisé en ce que** le dispositif de protection (16) comporte deux bras longitudinaux extérieurs (19) qui sont disposés parallèlement l'un à l'autre et entre lesquels est disposé l'élément de protection (17) comportant au moins deux bras transversaux (20).

5. Véhicule agricole (1) selon la revendication 4, **caractérisé en ce que** les bras longitudinaux (19) présentent un tracé incurvé dans leur direction longitudinale.

6. Véhicule agricole (1) selon une des revendications 4 ou 5, **caractérisé en ce que** les bras longitudinaux (19) comportent des portions d'extrémité qui sont pourvues d'un premier trou (26) autour duquel, et à distance radiale duquel, au moins deux autres trous débouchants (28) sont disposés sur un tracé circulaire.

7. Véhicule agricole (1) selon une des revendications précédentes, **caractérisé en ce que** l'élément de protection (17) est conçu sous la forme d'un composant à plat.

8. Véhicule agricole (1) selon une des revendications 1 à 7, **caractérisé en ce que** le dispositif de protection (16) est basculable dans une direction opposée au capot-moteur (11).

9. Véhicule agricole (1) selon une des revendications 1 à 8, **caractérisé en ce que** le dispositif de protection (16) est fabriqué dans un métal léger et/ou une matière synthétique.
